# EUROPÄISCHE PATENTSCHRIFT

(11) **EP 3 129 738 B1**
(45) Veröffentlichungstag und Bekanntmachung des Hinweises auf die Patenterteilung: **22.01.2020**
(21) Anmeldenummer: 15722025.2
(22) Anmeldetag: 02.04.2015
(51) Int. Cl.: F28F 25/04, F28D 3/04, F28B 9/04, B01D 3/00

(54) **FLÜSSIGKEITSVERTEILER UND ANORDNUNG**
LIQUID DISTRIBUTOR AND ARRANGEMENT
DISTRIBUTEUR DE LIQUIDE ET ARRANGEMENT

(30) Priorität: 08.04.2014 DE 102014105008
(43) Veröffentlichungstag der Anmeldung: 15.02.2017
(73) Patentinhaber: Technische Universität Berlin, 10623 Berlin (DE)
(72) Erfinder: PETERSEN, Stefan, 10245 Berlin (DE); LANSER, Wolfgang, 10245 Berlin (DE); HENNRICH, Christian, 10245 Berlin (DE); HENNING, Reinken, 10999 Berlin (DE)
(74) Vertreter: Bittner, Thomas L.
(86) Internationale Anmeldenummer: PCT/DE2015/100144
(87) Internationale Veröffentlichungsnummer: WO 2015/154753

(56) Entgegenhaltungen:
- WO-A2-2005/088226
- DD-A3- 266 699
- JP-A- 2004 125 317
- US-A- 2 732 190
- US-A- 3 446 489
- US-A- 4 476 069

## Beschreibung

Die Erfindung betrifft einen Flüssigkeitsverteiler zum drucklosen flächigen Austragen einer Flüssigkeit sowie eine Anordnung.

### Hintergrund

Derartige Flüssigkeitsverteiler kommen zum Beispiel in Kälteerzeugungsanlagen zum Einsatz. Kälteerzeugungsanlagen erzielen in den vergangenen Jahren enorme Zuwachsraten im Markt. Längere Kühlketten in der Lebensmittelindustrie, höhere Prozessleistungen und komfortablere Wohn- und Arbeitsbedingungen erfordern neue effiziente Kälteerzeugungsanlagen. Hierbei dominieren elektrisch angetriebene Kompressionsanlagen, die von thermisch angetriebenen Ab- und Adsorptionsverfahren ergänzt werden können. Letztere stellen vor allem vor dem Hintergrund der Effizienzsteigerung der Energieverwendung auch zur Steigerung von KWK Anlagen (KWK - Kraft-Wärme-Kopplung) einen ressourcenschonenden Weg dar, bei der Kältenutzung die Stromnachfrage nicht zusätzlich zu steigern und stattdessen die Abwärme aus der Stromproduktion direkt zur Kälteerzeugung einzusetzen.

Aufgabesysteme mit einem Flüssigkeitsverteiler lassen sich in zwei wesentliche Klassen einteilen. Es werden versprühende Systeme und abtropfende Systeme unterschieden. Versprühende Systeme benötigen in aller Regel im Einlauf der Sprühvorrichtung einen Vordruck, der abhängig von der Düsenform ein Vielfaches des Druckes ist, den die tropfenden, drucklosen Systeme benötigen. Diesen Systemen genügt eine geringe hydrostatische Höhe über einer Abtropfvorrichtung. Drucklose Systeme können aufgrund ihrer Eigenschaft, die Schwerkraft zu nutzen, nur von oben her aufgeben, wohingegen druckbehaftete Systeme auch von unten nach oben oder seitlich sprühen können. Ein Flüssigkeitsverteiler druckloser Bauart ist aus dem Dokument DE 10 2004 012 276 A1 bekannt, welches auch als WO 2005 / 088226 A2 veröffentlicht wurde.

Allgemein haben drucklose Systeme den Vorteil, dass keine Energie aufgewendet werden muss, um das Fluid unter Druck zu setzen, und dass die durchströmten Querschnitte der meisten drucklosen Systeme ein Vielfaches der Düsendurchmesser von Druck beaufschlagten Sprühsystemen ist, so dass die Systeme weniger empfindlich auf feste Fraktionen im Fluid reagieren und funktionieren. Allerdings haben bisher bekannte drucklose Abtropfsysteme mit Verschmutzung zu kämpfen. Bei dem bekannten Flüssigkeitsverteiler im Dokument DE 10 2004 012 276 A1 wird der Einlauf in einen Kanal, an dessen unterem Ende die Abtropfstelle angeordnet ist, signifikant oberhalb der Wanne in der das Fluid steht (fließt) positioniert, so dass sich Feststoffe am Boden der Wanne sammeln.

Das Dokument JP 2004 125317 A offenbart einen Kühlturm mit einem oberen Tank, in den gerade Rohre hineinragen. Die oberen Enden der Rohre sind als Ansaugöffnungen ausgebildet. Die unteren Enden der Rohre sind Auslassöffnungen, über die Sprühwasser in einen Nassluftdurchlass des Kühlturms gelangt.

Im Dokument US 3,446,489 ist ein Flüssigkeitsverteiler für Kontakttürme offenbart, in dem mindestens eine horizontale Platte mit den Wänden des Turms verbunden ist. Die Platte formt mit Flanschen entlang ihres Umfangs einen Tank. Die Platte weist mehrere auf ihrer Oberflache verteilte Öffnungen auf, in denen jeweils ein poröses Bauteil angeordnet ist. Die Porosität ist so gewählt, dass der Flüssigkeitsaustrag im Wesentlichen dem Flüssigkeitseintrag auf die Platte gleicht.

Aus dem Dokument US 4,476,069 ist ein Flüssigkeitsverteiler für den Einsatz in Dampf-Flüssigkeits-Kontaktsäulen bekannt. Für eine gleichmäßige Verteilung der herabfließenden Flüssigkeit sind seitliche Öffnungen in Wannen vorgesehen, wobei die Größe der Öffnungen so gewählt ist, dass die Öffnungen eingetaucht bleiben. Für eine bessere Verteilung kann die Flüssigkeit an die Öffnungen angrenzenden vertikalen Tropfstangen anhaften und an diesen unter Schwerkrafteinfluss herablaufen.

Im Dokument US 2,732,190 ist ein Kühlturm beschrieben, in dem zu kühlendes Wasser einen luftdurchströmten Aufbau mehrmals durchläuft, in welchen das Wasser aus über dem Aufbau angeordneten Verteilschalen heruntertropft. Der Luftstrom erfolgt hierbei quer zur generellen Strömungsrichtung des Wassers.

Im Dokument DD 266 699 A3 ist ein Flüssigkeitsverteiler offenbart, bei dem mindestens zwei horizontal parallele perforierte Platten in einem dem Kapillareffekt gewährleistenden Abstand übereinander angeordnet sind, wobei die Perforationen der unteren Platte von Kapillarflüssigkeitsleitem nach unten durchragt werden. Zum Ausbringen der Flüssigkeit gelangt diese aufgrund des Kapillareffektes durch Löcher in der oberen Platte in einen Zwischenraum zwischen der oberen und der unteren Platte. In dem Zwischenraum verteilt sich die Flüssigkeit wiederum auf Basis des Kapillareffektes, um dann diesen Effekt wiederum nutzend, durch Löcher in der unteren Platte ausgetragen zu werden, wobei die Löcher der unteren Platte Kapillarflüssigkeitsleiter eingesteckt sind. Der Flüssigkeitstransport von der Oberseite der oberen Platte zur Unterseite der unteren Platte durch die Plattenanordnung hindurch erfolgt stets den Kapillareffekt nutzend. Hierbei besteht das Problem, dass sich die Kapillarräume im Betrieb versetzen, so dass die Funktionalität des Flüssigkeitsverteilers beeinträchtigt wird.

Aus dem Dokument DE 10 2005 028 902 A1 sind ein Wärmetauscher und ein Verfahren zur Herstellung desselben bekannt, wobei der Wärmetauscher eine Zwischenschicht zum Kühlen einer Wärmequelle aufweist. Die Zwischenschicht ist mit der Wärmequelle gekoppelt und ausgelegt, ein Fluid hindurchzuleiten. Der Wärmetauscher umfasst ferner eine Verteilerschicht, die mit der Zwischenschicht gekoppelt ist. Die Verteilerschicht umfasst mindestens einen ersten Anschluss, der mit einer ersten Gruppe von vereinzelten Löchern gekoppelt ist, die Fluid durch die erste Gruppe kanalisieren. Die Verteilerschicht umfasst mindestens einen zweiten Anschluss, der mit einer zweiten Gruppe von vereinzelten Löchern gekoppelt ist, die Fluid durch die zweite Gruppe kanalisieren. Die erste Gruppe von Löchern und die zweite Gruppe von Löchern sind angeordnet, um eine minimierte Fluidpfadlänge zwischen dem ersten und dem zweiten Anschluss bereitzustellen, um die Wärmequelle geeignet zu kühlen. Bevorzugt ist jedes Loch in der ersten Gruppe in einem dichtesten optimalen Abstand zu einem benachbarten Loch der zweiten Gruppe angeordnet.

Aus dem Dokument DE 11 51 491 A ist eine Vorrichtung zum gleichmäßigen Verteilen eines Flüssigkeit-Dampf-Gemisches auf ein Kontaktbett aus Festkörperpartikeln bekannt. Das Gemisch durchströmt den Reaktor von oben nach unten. Es ist ein mit Öffnungen versehener Verteilerboden im oberen Teil des Reaktors vorgesehen. Weiterhin sind in der oberen Begrenzungsschicht des Festkörperbetts angeordnete, oben offene, durchlässige Körbe gebildet.

### Zusammenfassung

Aufgabe der Erfindung ist es, einen Flüssigkeitsverteiler zum drucklosen flächigen Aufgeben einer Flüssigkeit sowie einer Anordnung anzugeben, mit denen eine auszubringende Flüssigkeit effizient und bei unterschiedlichster Viskosität, Oberflächenspannung und / oder Menge betriebsstabil über eine gewünschte Fläche verteilt werden kann.

Zur Lösung der Aufgabe ist ein Flüssigkeitsverteiler zum drucklosen flächigen Aufgeben einer Flüssigkeit nach dem unabhängigen Anspruch 1 vorgesehen. Weiterhin ist eine Anordnung mit einem Flüssigkeitsverteiler nach dem Anspruch 14 geschaffen. Ausgestaltungen sind Gegenstand von abhängigen Unteransprüchen.

Nach einem Aspekt ist ein Flüssigkeitsverteiler zum drucklosen flächigen Aufgeben einer Flüssigkeit geschaffen, welcher eine Verteilerwanne mit einem Wannenboden aufweist. Im Wannenboden ist zum Flüssigkeitsaustrag eine Anordnung von Löchern oder Durchbrüchen gebildet, die sich über zumindest eine Teilfläche des Wannenbodens erstrecken. Die Teilfläche kann durchgehend oder mit mehreren voneinander getrennten Unterteilflächen gebildet sein. In einer Ausgestaltung erfasst die Anordnung von Löchern im Wesentlichen den gesamten Wannenboden. Der Flüssigkeitsverteiler weist einen Zulauf auf, über den eine zu verteilende Flüssigkeit in der Verteilerwanne eingebracht werden kann, derart, dass sich die einge-brachte Flüssigkeit auf dem Wannenboden anstaut. Hierzu können Zulauf und / oder Flüssigkeitsaustrag eingestellt werden. Eine Stauhöhe kann je nach Anwendung verschieden sein und ist wahlweise steuerbar, zum Beispiel mittels regeln des Zulaufs. Weiterhin ist eine Halteeinrichtung mit eine Halteplatte vorgesehen, die den Wannenboden gegenüberliegend und hiervon beabstandet angeordnet ist. Wannenboden und Halteplatte können planparallel angeordnet sein. Aber auch eine Schrägstellung der Halteplatte in Beziehung zum Wannenboden kann vorgesehen sein. Von der Halteplatte erstrecken sich in Richtung des Wannenbodens vorstehende Verteilelemente, die jeweils ein zugeordnetes Loch der Anordnung von Löchern im Wannenboden durchgreifen und hierin lose aufgenommen sind, derart, dass die sich auf dem Wannenboden stauende Flüssigkeit durch freibleibende Lochbereiche hindurch ausgebracht werden kann. Die freibleibenden Lochbereiche oder Lochquerschnittsbereiche sind nicht von dem sich durch die Löcher erstreckende Verteilelementen erfasst.

Nach einem weiteren Aspekt ist eine Anordnung mit einem solchen Flüssigkeitsverteiler und einer Stoff- oder Wärmetauschfläche vorgesehen, auf die eine zu verteilende Flüssigkeit mittels des Flüssigkeitsverteilers flächig ausbringbar ist. Die Wärmetauschfläche kann zum Beispiel an einen Wärmeübertrager gebildet sein, insbesondere einem Rohrbündelwärmeübertrager, bei dem eine Rohraußenseite von einem Fluidfilm überströmt wird, zu dessen Ausbildung der Flüssigkeitsverteiler nutzbar ist. Der Flüssigkeitsverteiler kann in einer Absorptions- oder einer Adsorptionskälteanlage eingesetzt werden. Die Hauptkomponenten von Sorptionskälteanlagen sind Wärmetauscher, Verdampfer, Absorber, Desorber und Kondensator, wovon die ersten drei berieselte Rohrbündelwärmeübertrager sein können.

Alternativ oder ergänzend kann die Anordnung mit Flüssigkeitsverteiler und Stoff- oder Wärmetauschfläche in einem Wärmetransformator, einer Wärmepumpe oder einer anderen wärmetechnischen Anlage eingesetzt werden, in welcher eine Flüssigkeit drucklos und möglichst gleichmäßig zu verteilen ist.

Die Verteilerwanne kann einen oder mehrere Überläufe aufweisen für Flüssigkeit, die nicht durch die Löcher im Wannenboden ausgebracht wird.

Der Abstand zwischen der Halteplatte und dem Wannenboden kann einen freien Fluss der Flüssigkeit oder den Kapillareffekt unterstützend ausgeführt sein. Auch eine Kombination von Abstandsbereichen, die ein Fließen der Flüssigkeit frei vom Kapillareffekt sowie einen Transport unter Nutzung des Kapillareffektes ermöglichen, kann vorgesehen sein.

In den freibleibenden Lochbereichen, durch welche hindurch die Flüssigkeit ausgebracht werden kann, können Lochwand und äußere Oberfläche der Verteilelemente den Kapillareffekt sichernd beabstandet sein. Die freibleibenden Lochbereiche können Lochquerschnittsbereiche aufweisen, in denen der Kapillareffekt nicht sichergestellt oder sogar ausgeschlossen ist. Unterschiedliche freibleibende Lochbereiche, in denen der Kapillareffekt zum Flüssigkeitstransport beiträgt oder nicht, können innerhalb eines Loches auftreten. Auch können Löcher vorgesehen sein, in denen in den freibleibenden Lochbereichen der Kapillareffekt den Flüssigkeitstransport sichert, sowie Löcher, in denen der Kapillareffekt nur gemindert oder gar nicht auftritt.

Die Verteilelemente können in Form, Durchmesser und / oder Länge unterschiedlich ausgebildet sein. Die Löcher können in Form und / oder Durchmesser unterschiedlich ausgeprägt sind. Die freibleibenden Lochbereiche, die durch die Löcher und die Verteilelemente definiert sind, können hinsichtlich Form und / oder hydraulisch wirksamem Durchmesser unterschiedlich ausgeprägt sind.

Bei einer Ausgestaltung kann vorgesehen sein, dass das Verteilelement in einem das Loch durchgreifenden Verteilelementabschnitt einerseits und zugeordnetes Loch andererseits verschiedene Querschnittsformen aufweisen. Die Löcher im Wannenboden und / oder das Verteilelement in dem das Loch durchgreifenden Verteilelementabschnitt können eine Querschnittsform ausgewählt aus der folgenden Gruppe aufweisen: eckig, insbesondere viereckig oder dreiecksförmig, rund und oval. Die Querschnittformen von Verteilelement und Loch können auch gleich sein. Auch eine Kombination von Löchern, in die Verteilelemente mit gleicher Querschnittform eingreifen, und Löchern, in die Verteilelemente mit von der Lochquerschnittform verschiedener Querschnittform eingreifen, kann vorgesehen sein.

Die Verteilelemente sind an der Halteplatte angeordnet. Hierbei können die Verteilelemente lösbar an der Halteplatte angeordnet sein. In einer alternativen Ausführungsform sind die Verteilelemente nicht lösbar an der Halteplatte angeordnet, zum Beispiel angeschweißt. Auch eine Kombination von lösbaren und nicht lösbaren Verteilelementen an der Halteplatte kann vorgesehen sein. In Verbindung mit der lösbaren Befestigung der Verteilelemente an der Halteplatte kann vorgesehen sein, dass die Verteilelemente relativ zur Halteplatte verlagert werden können, zum Beispiel in eine Schrägstellung relativ zur Plattenebene.

Eine Fortbildung kann vorsehen, dass die Verteilelemente an der Halteplatte jeweils in einer zugeordneten Öffnung angeordnet sind. Im Zusammenhang mit dem Anordnen in einer zugeordneten Öffnung kann eine lösbare oder nicht lösbare Anordnung vorgesehen sein.

Die Verteilelemente können an der Halteplatte jeweils durch die zugeordnete Öffnung hindurch gesteckt sein, derart, dass ein Verteilelementkopf auf der Rückseite angeordnet ist, wahlweise in einer zugeordneten Vertiefung an der Halteplatte. Eine solche Ausführungsform ist beispielsweise mit Hilfe von Verteilelementen herstellbar, die eine Nagelform aufweisen.

Eine Weiterbildung kann vorsehen, dass der Rückseite der Haltplatte gegenüberliegend eine Deckplatte angeordnet ist, die auf den Verteilelementkopfabschnitten der durchgesteckten Verteilelemente aufliegt. Die Deckplatte kann auf der rückseitigen Oberfläche der Halteplatte aufliegen, zumindest abschnittsweise. Die Deckplatte kann wenigstens teilweise die Funktion übernehmen, die Verteilelemente an der Halteplatte in einer Betriebsstellung zu sichern. Es kann vorgesehen sein, dass die Deckplatte eine Verlagerung der Verteilelemente in dem zugeordneten Loch zulassend angeordnet ist, zum Beispiel im Zusammenhang mit einer Schrägstellung der Verteilelemente relativ zur Plattenebene. Die Deckplatte kann lösbar oder nicht lösbar mit der Halteplatte in Verbindung stehen.

Die Halteplatte kann mittels eines oder mehrerer Abstandshalter von dem Wannenboden beabstandet angeordnet sein. Der oder die Abstandshalter können austausch- oder auswechselbar sein, beispielsweise zum Zwecke des Veränderns des Abstandes zwischen Halteplatte und Wannenboden. Die Halteplatte kann lösbar oder nicht lösbar auf dem Abstandshaltern angeordnet sein.

Die Halteplatte kann zusammen mit den hieran angeordneten Verteilelementen relativ zum Wannenboden mit der Anordnung von Löchern verlagerbar angeordnet sein. Eine solche Verlagerung kann beispielsweise ein Verlagern der Halteplatte in einer planparallelen Ebene zum Wannenboden vorsehen, was dazu führt, dass die Verteilelemente in eine Schrägstellung gebracht werden. Alternativ oder ergänzend kann eine Verlagerung darin bestehen, den Abstand zwischen Wannenboden und Halteplatte zu verändern, wobei die Verteilelemente hierbei ihre Relativlage zur Halteplatte (aufrechte Stellung) nicht ändern müssen. Diese oder andere Relativverlagerungen zwischen Halteplatte und Wannenboden können genutzt werden in Verbindung mit einem Wartungsverfahren zum Lösen und Beseitigen von Verunreinigungen, die die Fließwege der auszubringenden Flüssigkeit in dem Flüssigkeitsverteiler behindern. Auch ein Rütteln der Halteplatte kann in diesem Zusammenhang vorgesehen sein.

Eine Ausführungsform kann vorsehen, dass die Halteplatte aufgrund der in die Wanne einströmenden Flüssigkeit und / oder der sich in der Wanne stauenden Flüssigkeit verlagerbar ist. Bei dieser Ausführungsform verlagert sich die Halteplatte in Relation zum Wannenboden zum Beispiel aufgrund des Einströmens der Flüssigkeit, zum Beispiel findet ein Anheben statt. Alternativ oder ergänzend kann vorgesehen sein, dass sich die Halteplatte bewegt, wenn sich die Flüssigkeit am Wannenboden aufstaut, beispielsweise mittels Anheben, wie dies auch beim Einströmen der Flüssigkeit der Fall sein kann.

Die Halteplatte kann in der Verteilerwanne angeordnet sein. Die Halteplatte ist hier im Volumen der Verteilerwanne angeordnet. Alternativ kann vorgesehen sein, dass die Halteplatte oberhalb der Wanne gehalten wird, wobei dann die Verteilelemente in die Wanne hinein ragen und hindurch den Wannenboden verlaufen.

Eine Ausgestaltung kann vorsehen, dass die Verteilelemente im Bereich eines von der Halteplatte vorstehenden Abschnittes, welcher das zugeordnete Loch im Wannenboden durchgreift, als Stift oder Dorn ausgeführt sind. Bei dieser oder anderen Ausführungsformen können die Verteilelemente, zumindest soweit sie von der Halteplatte abstehen, eine Zylinderform aufweisen.

Die Halteplatte kann mindestens eine Durchlassöffnung aufweisen, durch die hindurch die eingebrachte Flüssigkeit zum Wannenboden hin gelangen kann. Vergleichbar der Durchlassöffnung der Halteplatte kann die Deckplatte eine Öffnung aufweisen, durch die hindurch die eingebrachte Flüssigkeit zum Wannenboden gelangt. Die Durchlassöffnungen in der Halteplatte und der Deckplatte können wenigstens teilweise flächig überlappend gebildet sein. Der Flüssigkeitstransport zum Wannenboden hin kann in der oder den Durchlassöffnungen aufgrund des Kapillareffektes und / oder frei hiervon erfolgen.

### Beschreibung von Ausführungsbeispielen

Im Folgenden werden Ausführungsbeispiele unter Bezugnahme auf Figuren einer Zeichnung näher erläutert. Hierbei zeigen:
- Fig. 1: eine schematische Darstellung eines Flüssigkeitsverteilers im Querschnitt,
- Fig. 2: eine perspektive Darstellung des Flüssigkeitsverteilers von schräg unten und
- Fig. 3: schematische Darstellungen von Abschnitten eines Wannenbodens des Flüssigkeitsverteilers, bei dem Löcher von Verteilelementen mit unterschiedlichen Querschnittsformen durchgriffen werden.

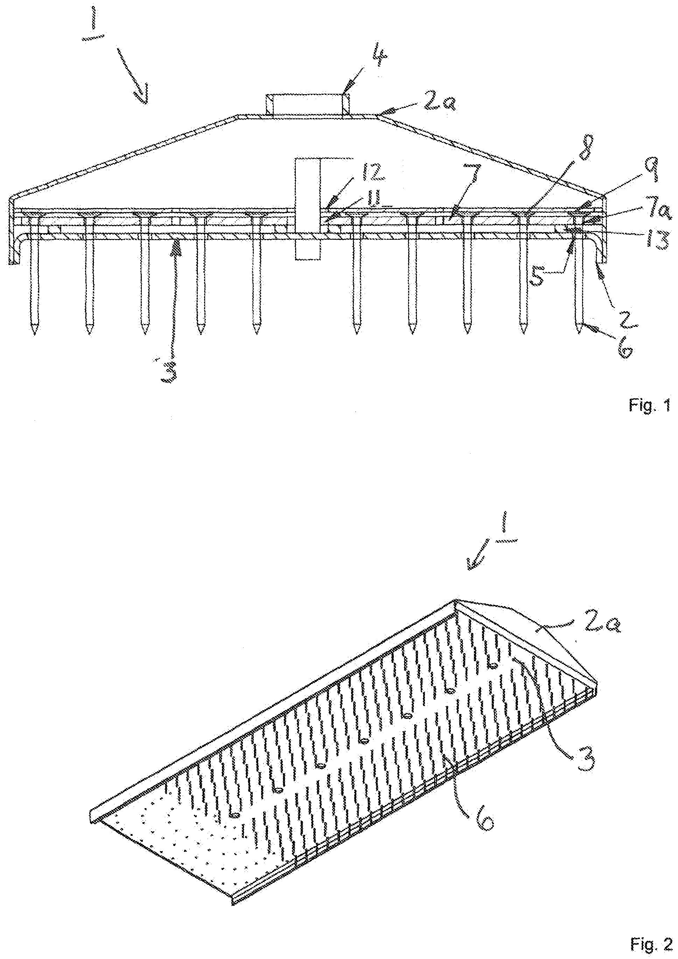

Fig. 1 zeigt eine schematische Darstellung eines Flüssigkeitsverteilers 1 im Querschnitt. Es ist eine Verteilerwanne 2 mit einem Wannenboden 3 gebildet. Die Verteilerwanne ist in der dargestellten Form deckseitig mittels einer Abdeckung 2a geschlossen ausgeführt. Über einen Zulauf 4 kann in der Verteilerwanne 2 eine zu verteilende Flüssigkeit eingebracht werden. Im Wannenboden 3 ist eine Anordnung von Löchern 5 vorgesehen. Die Löcher der Anordnung 5 werden jeweils von einem Verteilelement 6 durchgriffen, welches sich von einer Halteplatte 7 in Richtung des Wannenbodens 3 erstreckt und dann die Löcher der Anordnung 5 durchgreift.

Bei der gezeigten Ausführungsform liegt ein Verteilelementkopfabschnitt 8 deckseitig auf der Halteplatte 7 auf. Die Verteilelemente 6 durchgreifen Durchbrüche 7a in der Halteplatte 7. Dem Verteilelementkopfabschnitt 8 gegenüberliegend ist eine Deckplatte 9 angeordnet, welche zur Sicherung der Verteilelemente 6 an der Halteplatte 7 beiträgt.

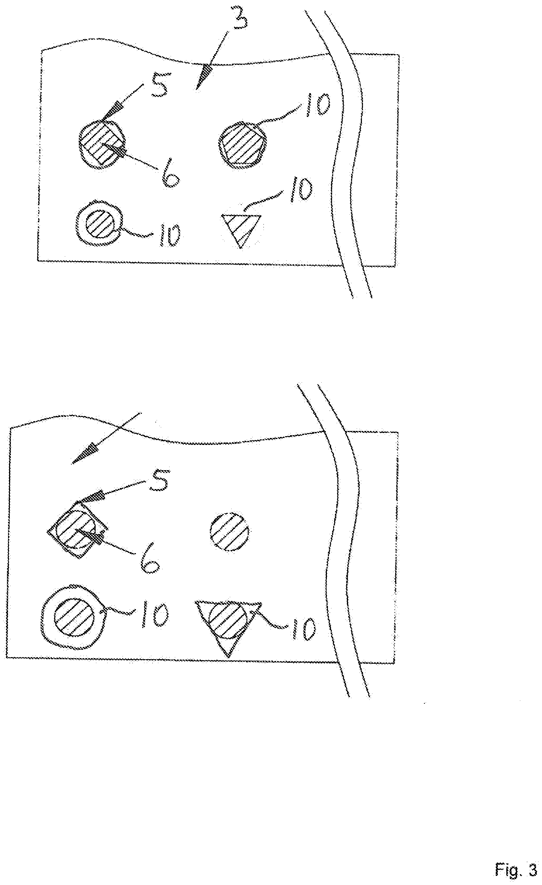

Die Verteilelemente 6 sind lose in den Löchern 5 der Anordnung aufgenommen, derart, dass im Querschnittsbereich der Löcher 5 der Anordnung freibleibende Lochbereiche 10 (vgl. Fig. 3 unten) gebildet sind, durch die hindurch die eingebrachte Flüssigkeit ausgebracht werden kann.

In der Halteplatte 7 sowie der Deckplatte 9 sind Durchlassöffnungen 11, 12 gebildet, um die eingebrachte Flüssigkeit zum Wannenboden 3 hin durchzulassen, so dass sich die auszubringende Flüssigkeit oberhalb des Wannenbodens 7 staut. Der Abstand zwischen Wannenboden 3 und Halteplatte 7 ist bei der gezeigten Ausführungsform bestimmt mit Hilfe von Abstandshaltern 13.

Fig. 2 zeigt eine perspektivische Darstellung des Flüssigkeitsverteilers 1 schräg von unten.

Fig. 3 zeigt schematische Darstellungen von Abschnitten des Wannenbodens 3 mit Löchern 5, die jeweils von einem Verteilelement 6 durchgriffen werden. Gezeigt ist, dass sowohl der Querschnitt der Löcher 5 als auch der Querschnitt der Verteilelemente 6 im Bereich des durchgriffenen Loches verschieden sein kann. Wesentlich ist, dass freie Lochbereiche 10 gebildet sind, durch die hindurch die aufzugebene Flüssigkeit durch den Wannenboden 3 hindurch gelangen kann, sei es mit oder ohne Einfluss des Kapillareffektes.

Mittels des Flüssigkeitsverteilers kann die Flüssigkeit kontinuierlich oder regelmäßig aufgegeben werden. Um eine gleichmäßige Verteilung der Flüssigkeit zu gewährleisten, ist eine Vielzahl an Tropfstellen vorgesehen. Hierbei kann die Abtropfmenge, die unter anderem eine Funktion des freien Querschnitts zwischen dem Wannenbodenloch und dem durchgreifenden Verteilelement 6 ist, durch Kombination unterschiedlicher Ausführungen innerhalb einer Anordnung sich von Tropfstelle zu Tropfstelle unterscheiden.

In einer Ausführung sind alle Verteilelemente 6 und Löcher gleich. Zielführende Variationen auch innerhalb einer Anordnung können sein: Form / Durchmesser des Verteilelementes 6; Form, Durchmesser des Lochs; Abstand Wannenboden 3 und Halteplatte 7 zueinander; und Dicke des Wannenbodens 3.

Es besteht eine nicht formfeste, sondern lockere Verbindung zwischen der Halteplatte 7 (inkl. der Deckplatte) und Wannenboden 3, so dass die Halteplatte 7 sich leicht gegen die Bodenplatte verschieben lässt. Aufgrund dieser Beweglichkeit kann eine Reinigung der freibleibenden Querschnitte zwischen den Verteilelementen 6 und dem Wannenboden 3, die durch die Ausgestaltung der Löcher und der Verteilelemente 6 vorgegeben ist, erfolgen.

Eine weitere vorteilhafte Ausführung könnte derart gestaltet sein, dass die Flüssigkeitszuführung derart gestaltet ist, dass die Halteplatte 7 sich in Abhängigkeit von der Flüssigkeitszuführung bewegt. So könnte die Halteplatte 7 wie ein Deckel auf der Flüssigkeitszuführung liegen, so dass sie sich heben muss, damit Flüssigkeit einströmt. Diese Bewegung würde den Reinigungseffekt der offenen Querschnitte an den Löchern zu den Abtropfstellen fördern.

Eine kann vorsehen, dass die Verteilerelemente 6 unterschiedliche Durchmesser und / oder unterschiedliche Formen aufweisen, so dass die an jedem Verteilelement 6 lokal austretenden Flüssigkeitsmengen verschieden sind. Dies kann dazu dienen, die darunter liegende Wärmetauschereinheit bei geringen zu verteilenden Flüssigkeitsmengen gleichmäßiger über die gesamte Fläche zu benetzen, unabhängig von der Entfernung zum Flüssigkeitszulauf.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Flüssigkeitsverteiler (1) zum drucklosen flächigen Aufgeben einer Flüssigkeit, mit
- einer Verteilerwanne (2) mit einem Wannenboden (3), der zum Flüssigkeitsaustrag eine Anordnung von Löchern (5) aufweist, die sich über zumindest eine Teilfläche des Wannenbodens (3) erstreckt,
- einem Zulauf (4), über den eine zu verteilende Flüssigkeit in der Verteilerwanne (2) einbringbar ist, derart, dass sich die eingebrachte Flüssigkeit auf dem Wannenboden (3) anstaut, und
- Verteilelementen (6), die jeweils ein zugeordnetes Loch der Anordnung von Löchern (5) im Wannenboden (3) durchgreifen, derart, dass die sich auf dem Wannenboden (3) stauende Flüssigkeit durch freibleibende Lochbereiche (10) hindurch ausgebracht werden kann, die nicht von den sich durch die Löcher (5) erstreckenden Verteilelementen (6) erfasst sind, **dadurch gekennzeichnet, dass** der Flüssigkeitsverteiler eine Haltevorrichtung mit einer Halteplatte (7) aufweist, die dem Wannenboden (3) gegenüberliegend und hiervon beabstandet angeordnet ist, wobei die Verteilelemente (6) von der Halteplatte (7) in Richtung des Wannenbodens (3) vorstehen und an der Halteplatte (7) lösbar und/oder nicht lösbar angeordnet sind und in den Löchern (5) im Wannenboden (5) lose aufgenommen sind.

2. Flüssigkeitsverteiler (1) nach Anspruch 1, **dadurch gekennzeichnet, dass** in den freibleibenden Lochbereichen (10), durch welche hindurch die Flüssigkeit ausgebracht werden kann, Lochwand und äußere Oberfläche der Verteilelemente (6) den Kapillareffekt sichernd beabstandet sind.

3. Flüssigkeitsverteiler (1) nach Anspruch 1 oder 2, **dadurch gekennzeichnet, dass** das Verteilelement (6) in einem das Loch (5) durchgreifenden Verteilelementabschnitt und zugeordnetes Loch verschiedene Querschnittsformen aufweisen.

4. Flüssigkeitsverteiler (1) nach mindestens einem der vorangehenden Ansprüche, **dadurch gekennzeichnet, dass** die Verteilelemente (6) an der Halteplatte (7) jeweils in einer zugeordneten Öffnung (7a) angeordnet sind.

5. Flüssigkeitsverteiler (1) nach Anspruch 4, **dadurch gekennzeichnet, dass** die Verteilelemente (6) an der Halteplatte (7) jeweils durch die zugeordnete Öffnung (7a) hindurch gesteckt sind, derart, dass ein Verteilelementkopfabschnitt (8) auf der Rückseite der Halteplatte (7) angeordnet ist.

6. Flüssigkeitsverteiler (1) nach Anspruch 5, **dadurch gekennzeichnet, dass** der Rückseite der Haltplatte (7) gegenüberliegend eine Deckplatte (9) angeordnet ist, die auf den Verteilelementkopfabschnitten (8) der durchgesteckten Verteilelemente (6) aufliegt.

7. Flüssigkeitsverteiler (1) nach mindestens einem der vorangehenden Ansprüche, **dadurch gekennzeichnet, dass** die Halteplatte (7) mittels eines oder mehrerer Abstandshalter (13) von dem Wannenboden (3) beabstandet angeordnet ist.

8. Flüssigkeitsverteiler (1) nach mindestens einem der vorangehenden Ansprüche, **dadurch gekennzeichnet, dass** die Halteplatte (7) zusammen mit den hieran angeordneten Verteilelementen (6) relativ zum Wannenboden (3) mit der Anordnung von Löchern (5) verlagerbar angeordnet ist.

9. Flüssigkeitsverteiler (1) nach Anspruch 8, **dadurch gekennzeichnet, dass** die Halteplatte (7) aufgrund der in die Verteilerwanne (2) einströmenden Flüssigkeit und / oder der sich in der Verteilerwanne (2) stauenden Flüssigkeit verlagerbar ist.

10. Flüssigkeitsverteiler (1) nach mindestens einem der vorangehenden Ansprüche, **dadurch gekennzeichnet, dass** die Halteplatte (7) in der Verteilerwanne (2) angeordnet ist.

11. Flüssigkeitsverteiler (1) nach mindestens einem der vorangehenden Ansprüche, **dadurch gekennzeichnet, dass** die Verteilelemente (6) im Bereich eines von der Halteplatte (7) vorstehenden Abschnittes, welcher das zugeordnete Loch im Wannenboden (3) durchgreift, als Stift oder Dorn ausgeführt ist.

12. Flüssigkeitsverteiler (1) nach mindestens einem der vorangehenden Ansprüche, **dadurch gekennzeichnet, dass** die Haltplatte (7) mindestens eine Durchlassöffnung (11) aufweist, durch die hindurch die eingebrachte Flüssigkeit zum Wannenboden (3) hin gelangen kann.

13. Anordnung mit einem Flüssigkeitsverteiler (1) nach mindestens einem der vorangehenden Ansprüche und einer Stoff- oder Wärmetauschfläche, auf die eine zu verteilende Flüssigkeit mittels des Flüssigkeitsverteilers (1) flächig ausbringbar ist.

## Claims

1. A fluid distributor (1) for the unpressurized, planar dispensing of a fluid, with
- a distributor tub (2) with a tub floor (3) having an array of holes (5) for discharging fluid, which extends over at least a partial surface of the tub floor (3),
- an inlet (4) through which a fluid to be distributed can be introduced into the distributor tub (2), such that the introduced fluid gathers on the tub floor (3), and
- distribution elements (6), which each pass through an allocated hole of the array of holes (5) in the tub floor (3), such that the fluid gathering on the tub floor (3) can be discharged through still exposed hole areas (10) that are not encompassed by the distribution elements (6) extending through the holes (5), **characterized in that** the fluid distributor has a retaining device with a retaining plate (7), which is arranged opposite the tub floor (3) and spaced apart therefrom, wherein the distribution elements (6) protrude from the retaining plate (7) in the direction of the tub floor (3), and are detachably and/or non-detachably arranged on the retaining plate, and loosely received into the holes (5) in the tub floor (5).

2. The fluid distributor (1) according to claim 1, **characterized in that**, in the still exposed hole areas (10) through which the fluid can be discharged, the hole wall and outer surface of the distribution elements (6) are spaced apart securing the capillary effect.

3. The fluid distributor (1) according to claim 1 or 2, **characterized in that** the distribution element (6) in a distribution element section passing through the hole (5) and an allocated hole have different cross sectional shapes.

4. The fluid distributor (1) according to one of the preceding claims, **characterized in that** the distribution elements (6) on the retaining plate (7) are each arranged in an allocated opening (7a).

5. The fluid distributor (1) according to claim 4, **characterized in that** the distribution elements (6) on the retaining plate (7) are each inserted through the allocated opening (7a), such that a valve element head section (8) is arranged on the rear side of the retaining plate (7).

6. The fluid distributor (1) according to claim 5, **characterized in that** a cover plate (9) is arranged opposite the rear side of the retaining plate (7), which cover plate (9) lies on the distribution element head sections (8) of the inserted distribution elements (6).

7. The fluid distributor (1) according to one of the preceding claims, **characterized in that** the retaining plate (7) is arranged spaced apart from the tub floor (3) by means of one or several spacers (13).

8. The fluid distributor (1) according to one of the preceding claims, **characterized in that** the retaining plate (7) along with the distribution elements (6) arranged hereon are displaceably arranged relative to the tub floor (3) with the array of holes (5).

9. The fluid distributor (1) according to claim 8, **characterized in that** the retaining plate (7) can be displaced because of the fluid streaming into the distributer tub (2) and/or the fluid gathering in the distributor tub (2).

10. The fluid distributor (1) according to one of the preceding claims, **characterized in that** the retaining plate (7) is arranged in the distributor tub (2).

11. The fluid distributor (1) according to one of the preceding claims, **characterized in that** the distribution elements (6) in the area of a section protruding from the retaining plate (7) that passes through the allocated hole in the tub floor (3) are designed as a pin or mandrel.

12. The fluid distributor (1) according to one of the preceding claims, **characterized in that** the retaining plate (7) has at least one outlet opening (11), though which the introduced fluid can make its way to the tub floor (3).

13. An arrangement with a fluid distributor (1) according to at least one of the preceding claims and a material or heat exchange surface, onto which a fluid to be distributed can be planarly dispensed by means of a fluid distributor (1).

## Revendications

1. Distributeur de fluide (1), destiné à dispenser à plat, sans pression un fluide, comprenant :
- une cuve distributrice (2), pourvue d'un fond inférieur de cuve (3), qui pour l'application de fluide comporte une configuration de trous (5) qui s'étend sur au moins une surface partielle du fond inférieur de cuve (3),
- une arrivée (4) par l'intermédiaire de laquelle un fluide qui doit être distribué est susceptible d'être introduit dans la cuve distributrice (2), de telle sorte que le fluide introduit s'accumule sur le fond inférieur de la cuve (3), et
- des éléments distributeurs (6), dont chacun traverse un trou associé de la configuration de trous (5) dans le fond inférieur de la cuve (3), de telle sorte que du fluide accumulé sur le fond inférieur de la cuve (3) puisse être expulsé à travers des zones trouées (10) restées libres qui ne sont pas couvertes par les éléments distributeurs (6), s'étendant à travers les trous (5), **caractérisé en ce que** le distributeur de fluide comporte un dispositif de maintien, pourvu d'une plaque de maintien (7) qui est placé à l'opposée du fond inférieur de la cuve (3) et avec un écart par rapport à celui-ci, les éléments distributeurs (6) débordant de la plaque de maintien (7) dans la direction du fond inférieur de cuve (3) et étant placés de manière amovible et/ou non amovible sur la plaque de maintien (7) et étant librement réceptionnés dans les trous (5) dans le fond inférieur de la cuve (5).

2. Distributeur de fluide (1) selon la revendication 1, **caractérisé en ce que** dans les zones trouées (10) restées libres, à travers lesquelles le fluide peut être expulsé, la paroi trouée et la surface extérieure des éléments distributeurs (6) sont écartées, de manière à assurer l'effet de capillarité.

3. Distributeur de fluide (1) selon la revendication 1 ou 2, **caractérisé en ce que** l'élément distributeur (6) comporte différentes formes de section transversale dans un segment d'élément distributeur qui traverse le trou (5) et dans le trou associé.

4. Distributeur de fluide (1) selon au moins l'une quelconque des revendications précédentes, **caractérisé en ce que** les éléments distributeurs (6) sont placés sur la plaque de maintien (7), chacun dans un orifice (7a) associé.

5. Distributeur de fluide (1) selon la revendication 4, **caractérisé en ce que** les éléments distributeurs (6) sont enfichés sur la plaque de maintien (7), chacun à travers l'orifice (7a) associé, de telle sorte qu'un segment de tête (8) d'élément distributeur soit placé sur la face arrière de la plaque de maintien (7).

6. Distributeur de fluide (1) selon la revendication 5, **caractérisé en ce qu'**au regard de la face arrière de la plaque de maintien (7) est placée une plaque de recouvrement (9), qui repose sur les segments de tête (8) d'éléments distributeurs des éléments distributeurs (6) enfichés.

7. Distributeur de fluide (1) selon au moins l'une quelconque des revendications précédentes, **caractérisé en ce que** la plaque de maintien (7) est placée en étant écartée du fond inférieur de la cuve (3) au moyen d'un ou de plusieurs espaceurs (13).

8. Distributeur de fluide (1) selon au moins l'une quelconque des revendications précédentes, **caractérisé en ce que**, conjointement avec les éléments distributeurs (6) qui sont placés sur celle-ci, la plaque de maintien (7) est placée en étant déplaçable par rapport au fond inférieur de la cuve (3) pourvu de la configuration de trous (5).

9. Distributeur de fluide (1) selon la revendication 8, **caractérisé en ce que** la plaque de maintien (7) est déplaçable, en raison du fluide affluant dans la cuve distributrice (2) et/ou du fluide s'accumulant dans la cuve distributrice (2).

10. Distributeur de fluide (1) selon au moins l'une quelconque des revendications précédentes, **caractérisé en ce que** la plaque de maintien (7) est placée dans la cuve distributrice (2).

11. Distributeur de fluide (1) selon au moins l'une quelconque des revendications précédentes, **caractérisé en ce que** dans la zone d'un segment débordant de la plaque de maintien (7), qui traverse le trou associé dans le fond de la cuve (3), les éléments de distributeurs (6) sont conçus sous la forme d'une tige ou d'une épine.

12. Distributeur de fluide (1) selon au moins l'une quelconque des revendications précédentes, **caractérisé en ce que** la plaque de maintien (7) comporte au moins un orifice de passage (11), à travers lequel le fluide introduit peut arriver vers le fond inférieur de la cuve (3).

13. Agencement, comportant un distributeur de fluide (1) selon au moins l'une quelconque des revendications précédentes et une surface échangeuse de matière ou échangeuse thermique, sur laquelle un fluide qui doit être distribué est susceptible d'être appliqué planaire-ment au moyen du distributeur de fluide (1).
